Europäisches Patentamt

European Patent Office

Office européen des brevets

(19)

(11) Publication number: **0 513 647 A1**

## EUROPEAN PATENT APPLICATION

(21) Application number: **92107636.0**

(22) Date of filing: **06.05.92**

(51) Int. Cl.5: **B62M 3/00**, B62J 21/00,
B62J 13/00

(30) Priority: **14.05.91 JP 107924/91**
**15.05.91 JP 109971/91**
**29.07.91 JP 59364/91 U**

(43) Date of publication of application:
**19.11.92 Bulletin 92/47**

(84) Designated Contracting States:
**AT BE CH DE DK ES FR GB GR IT LI LU NL SE**

(71) Applicant: **SHIMANO INC.**
**77, Oimatsucho 3-cho, Sakai-shi**
**Osaka(JP)**

(72) Inventor: **Nagano, Masashi**
**74-19, Midorigaoka**
**Izumi-shi, Osaka(JP)**

(74) Representative: **Säger, Manfred, Dipl.-Ing.**
**Richard-Strauss-Strasse 56**
**W-8000 München 80(DE)**

(54) **Bicycle crankset structure.**

(57) A crank mechanism for a bicycle having a crank
axle, a crank arm for driving the crank axle, and a
chainwheel rotatable with the crank axle. The crank
arm includes a boss fixed to the crank axle, and an
arm portion extending from the boss. The chain-
wheel includes a chain engaging portion, and a base
portion for contacting a peripheral surface of the
crank axle to position the chainwheel. The chain
engaging portion defines a first surface, and the
base portion defines a second surface displaced
inwardly from the first surface.

FIG.2

EP 0 513 647 A1

## BACKGROUND OF THE INVENTION

### FIELD OF THE INVENTION

The present invention relates to an improvement in a chainwheel and a chainwheel cover of a bicycle.

### DESCRIPTION OF THE RELATED ART

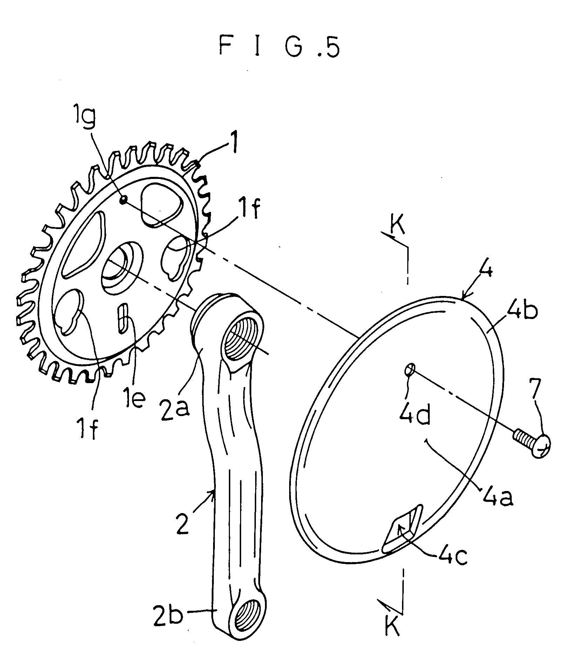

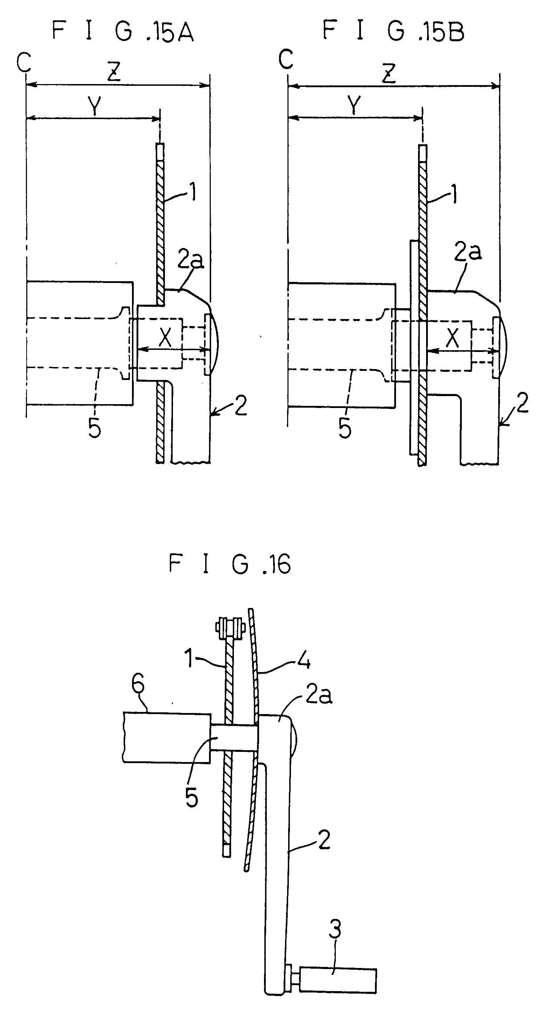

Conventionally, as shown in Fig. 15A, a chainwheel 1 of a bicycle is in certain cases attached to an engaging portion 2a of a crank arm 2 connected to a crankshaft 5. This structure has the disadvantage that, since the crank arm 2 normally is not formed with the same degree of precision as the crank axle 5 and chainwheel 1, the chainwheel 1 has a center of rotation not accurately aligned to an axis of the crank axle 5. On the other hand, a width X must be secured for a reliable engagement between the crank arm 2 and crank axle 5. If the chainwheel 1 is fixed peripherally of the crank axle 5 as shown in Fig. 5B, with a distance Y from a longitudinal centerline C of the bicycle to the chainwheel 1 is maintained, this results in the inconvenience of increasing a distance Z from the centerline C to the engaging portion of the crank arm 2.

Furthermore, as shown in Fig. 16, a conventional structure includes a cover 4 disposed between the chainwheel 1 and a proximal portion 2a of the crank arm 2 for covering the chainwheel 1. According to this structure, a foot of the cyclist could contact the proximal portion 2a since the entire crank arm 2 including the proximal portion 2a is exposed. In addition, with such a cover 4, the entire crank arm 2 must be removed to remove the cover 4 for repair or maintenance of the chainwheel 1.

### SUMMARY OF THE INVENTION

An object of the present invention is to provide a bicycle having a chainwheel whose center of rotation is accurately aligned to the axis of the crank axle without increasing the distance from the centerline of the bicycle frame to an outer end of the proximal portion of the crank arm.

The above object is fulfilled, according to the present invention, by a bicycle comprising a crank axle, a crank arm for driving the crank axle, and a chainwheel rotatable with the crank axle. The crank arm includes a proximal portion fixed to the crank axle, and a distal portion extending from the proximal portion. The chainwheel includes a chain engaging portion, and a base portion for contacting a peripheral surface of the crank axle to position the chainwheel. The chain engaging portion defines a first surface, and the base portion defines a second surface displaced inwardly from the first surface.

With the chainwheel shaped as above, the distance from the longitudinal centerline of the bicycle frame to the outer end of the proximal portion of the crank arm may be decreased without decreasing the width of the proximal portion engaging the crank axle. Further, since the chainwheel is in contact with the peripheral surface of the crank axle, the chainwheel has a center of rotation coinciding with an axis of the crank axle.

According to the above structure, the distance from the longitudinal centerline of the bicycle frame to the outer end of the proximal portion of the crank arm may be decreased as noted above. It is therefore possible to provide a cover outside the proximal portion of the crank arm for covering the chainwheel, without being an obstacle to a foot of the cyclist. This is effective to prevent the foot from contacting the proximal portion of the crank arm.

Further and other objects, features and effects of the invention will be apparent from the following more detailed description of the embodiments of the invention taken with reference to the accompanying drawings.

### BRIEF DESCRIPTION OF THE DRAWINGS

Fig. 1 is a side view of a bicycle pedaling apparatus in one embodiment of the present invention,
Fig. 2 is a sectional view of a principal portion of the pedaling apparatus,
Fig. 3 is a sectional view of a base portion of a chainwheel and adjacent components,
Fig. 4A is a perspective view of a boss of a crank arm,
Fig. 4B is a plan view of the crank arm,
Fig. 5 is an exploded perspective view of the chainwheel, cover and crank arm,
Fig. 6 is a section taken on a centerline K-K of the cover in Fig. 5,
Fig. 7 is a side view showing a concave surface of the cover,
Fig. 8 is a fragmentary sectional view showing engagement between a projection of the cover and a bore of the chainwheel,
Fig. 9 is a view showing a cutout of a cover in another embodiment of the invention,
Fig. 10 is a view showing a cutout of a cover in a further embodiment,
Fig. 11 is a view showing a positional relationship between a crank arm and the cutout shown in Fig. 10,
Fig. 12 is a view showing a cutout of a cover in a still further embodiment,
Figs. 13A, 13B and 13C show chain casings in three different shapes,
Fig. 14 shows a crank arm assembly of a bicycle having a chain casing,

Figs. 15A and 15B are sectional views of conventional chainwheel mounting structures, and

Fig. 16 is a view showing a positional relationship between a cover and adjacent components in a conventional structure.

## DETAILED DESCRIPTION OF THE PREFERRED EMBODIMENTS

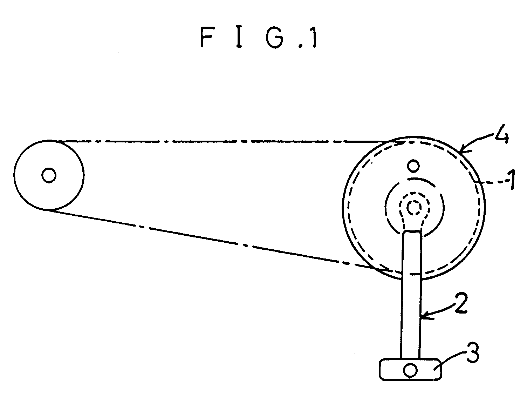

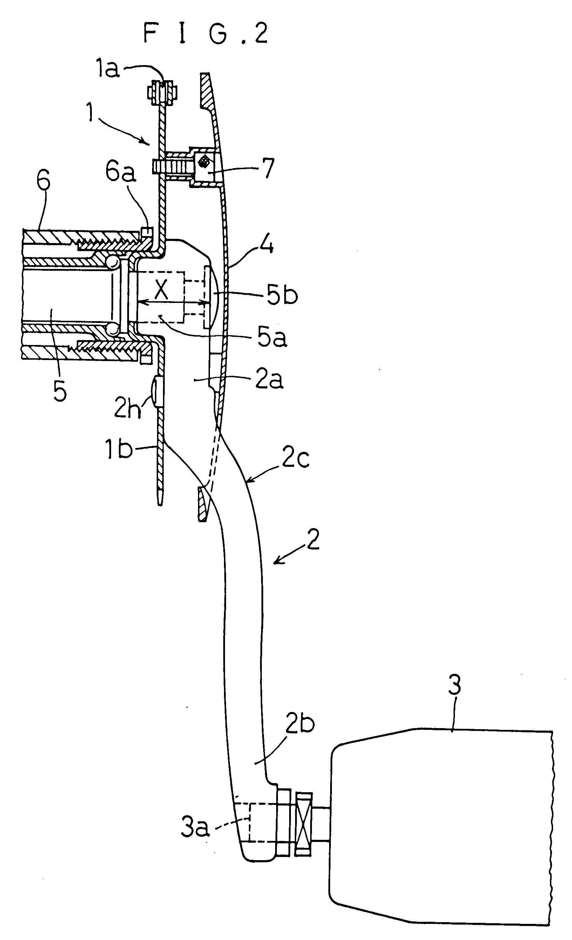

Fig. 1 shows a pedaling mechanism of a bicycle, which includes a chainwheel 1, a crank arm 2, a pedal 3, and a chainwheel cover 4 shielding the chainwheel 1. As shown in Fig. 2, the pedal 3 is rotatably and removably attached to the crank arm 2 through a pivotal axis 3a. A bicycle frame (not shown) has a bottom bracket 6 for rotatably supporting a crank axle 5 through bearings 5b.

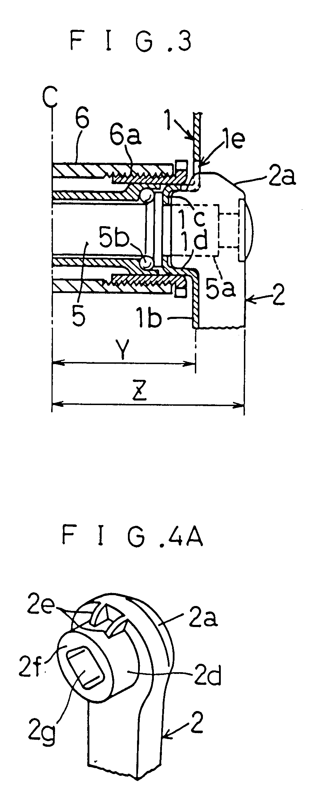

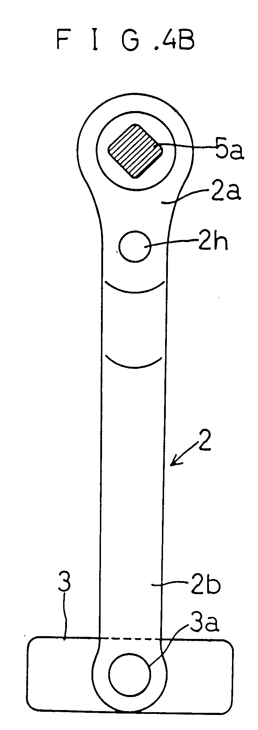

The crank arm 2 is connected to a crank attaching portion 5a of the crank axle 5. The crank arm includes a proximal portion 2a, an arm portion 2b outwardly displaced from the proximal portion 2a for rotatably supporting the pedal 3, and a transitional portion 2c between the proximal portion 2a and arm portion 2b. As shown in Fig. 4A, the proximal portion 2a includes a boss 2d defining an engaging hole 2g for engaging the crank attaching portion 5a of the crank axle 5. This engaging hole 2g is shaped non-circular, such as square-shaped as seen in Fig. 4B, and engageable with the crank attaching portion 5a having a corresponding shape, to allow the crank axle 5 to be rotated with turning of the crank arm 2. Reference 5b in the drawings denotes a retainer screw for preventing rightward movement of the crank arm 2.

As seen in Fig. 3, the chainwheel 1 is attached peripherally of the crank attaching portion 5a of the crank axle 5. As shown in Fig. 2, the chainwheel 1 includes an outer peripheral portion 1b defining teeth 1a for engaging a chain, a base portion 1c for contacting the crank attaching portion 5a of the crank axle 5, and a tubular connecting portion 1d formed between the peripheral portion 1b and base portion 1c and extending along the boss 2d of the crank arm 2. Thus, the chainwheel 1 according to the present invention is shaped to follow an outer peripheral surface of the boss 2d and an inward end surface 2f (Fig. 4A) thereof. Since the base portion 1c of the chainwheel 1 is in direct contact with the crank axle 5, the chainwheel 1 has a center of rotation coinciding with an axis of the crank axle 5 even where the crank arm 2 and crank axle 5 are not manufactured with the same degree of precision as the chainwheel 1.

As seen in Fig. 2, the base portion 1c of the chainwheel 1 is disposed more inwardly than the peripheral portion 1b. Therefore, although the proximal portion 2a of the crank arm 2 has a width X necessary for a reliable engagement with the crank attaching portion 5a, a distance Z from a centerline C of the crank axle 5 to an outer end of the proximal portion 2a is minimized as shown in Fig. 3.

The proximal portion 2a of the crank arm 2 includes a projection 2h extending into a slot 1e (Fig. 5) formed in the chainwheel 1, for transmitting a turning motion of the crank arm 2 to the chainwheel 1. As another method of transmitting a turning motion of the crank arm 2 to the chainwheel 1, projections 2e on the proximal portion 2a of the crank arm 2 may be placed in engagement with grooves 1e formed in the chainwheel 1.

As shown in Figs. 2 and 3, a seal 6a ins mounted in a space between an opening of the bottom bracket 6 and the tubular connecting portion 1d of the chainwheel 1 for preventing entry of dust and sand to the bottom bracket 6.

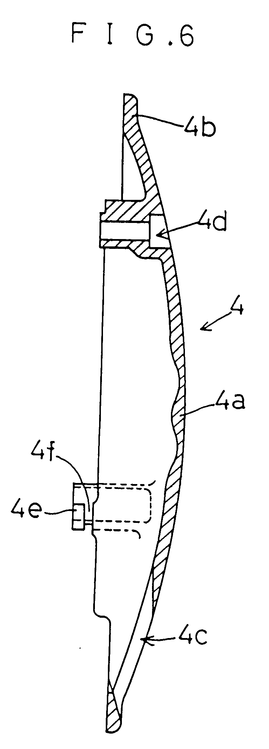

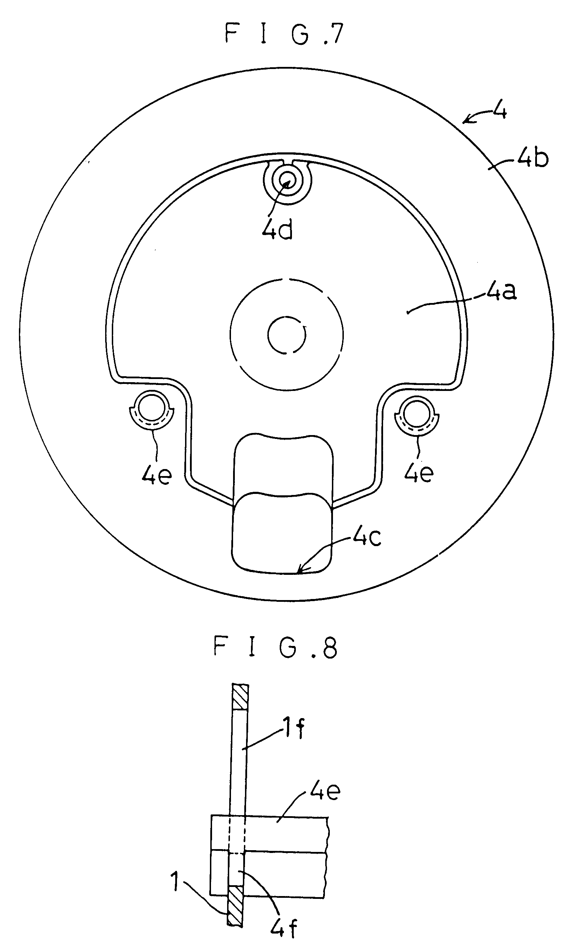

The chainwheel cover 4 will be described next. As shown in Figs. 2 and 5, the cover 4 is in the form of a slightly concaved disc having a larger radius than the chainwheel 1. The cover 4 has a center portion 4a for covering the proximal portion 2a of the crank arm 2, and a peripheral portion 4b continuous with the center portion 4a and covering the chainwheel 1. Further, the cover 4 includes a bore 4c through which the arm portion 2b of the crank arm 2 extends outwardly of the cover 4. As shown in Fig. 5, the cover 4 is attached to the chainwheel 1 by means of a screw 7 extending through a bore 4d of the cover 4 and meshed with a threaded bore 1g of the chainwheel 1. As shown in Figs. 6 and 7, the cover 4 includes a pair of projections 4e formed on an inside surface thereof. These projections 4e extend into a pair of bores 1f formed in the chainwheel 1. Each of these bores 1f is approximately circular, with a semicircular cutout of smaller radius formed at a lower end thereof. As best shown in Fig. 7, each of the projections 4e has in upper half of small radius and a lower half of large radius. The lower half includes a groove 4f defined adjacent a forward end thereof and having a radius corresponding to that of the upper half. As shown in Fig. 8, the groove 4f has a width substantially corresponding to a thickness of the chainwheel 1 to fit in one of the bores 1f of the chainwheel 1.

The way in which the cover 4 is attached to the chainwheel 1 will be described next. The pedal 3 is removed from the crank arm 2, and the arm portion 2b of the crank arm 2 is passed through the bore 4c of the cover 4. The cover 4 is moved along the crank arm 2, and the projections 4e of the cover 4 are placed in the bores 1f of the chainwheel 1. Subsequently, the entire cover 4 is pushed downward whereby the grooves 4f of the projections 4e are fitted in the small semicircular cutouts to secure the cover 4. After the cover 4 is placed on the chainwheel 1 as above, the screw 7 is used to fix the cover to the chainwheel 1.

As shown in Fig. 3, the distance Z from the centerline C of the crank axle 5 to the outer end of the proximal portion 2a of the crank arm 2 is minimized since the base portion 1c of the chainwheel 1 is disposed more inwardly than the peripheral portion 1b. In addition, as shown in Fig. 2, the proximal portion 2a of the crank arm 2 disposed inwardly of the arm portion 2b allows the cover 4 also to be disposed inwardly of the arm portion 2b. Thus, the cover 4 presents no obstacle to a foot of the cyclist, and prevents the foot and clothing of the cyclist from contacting the chainwheel 1 and the proximal portion 2a of the crank arm 2.

Other embodiments of the present invention will be described hereinafter. The components already described will not be described again, and like reference numerals will be used to identify like components.

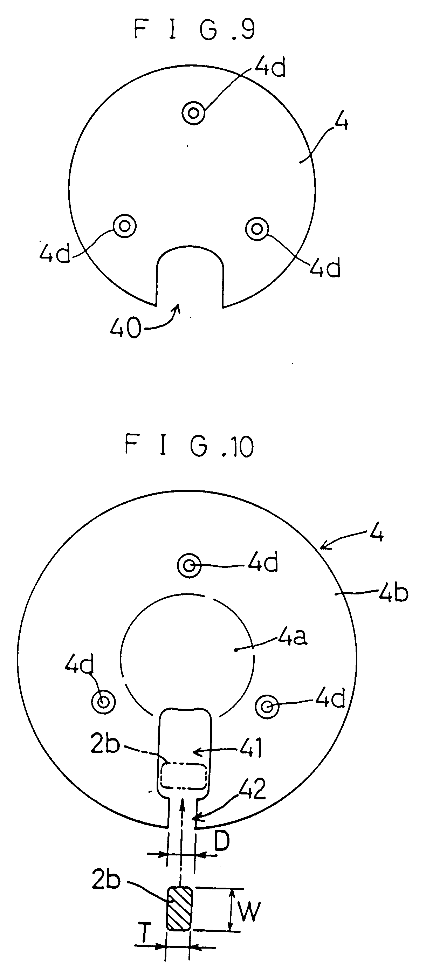

In the embodiment shown in Fig. 9, a circular cover 4 defines a cutout 40 extending to peripheral edges thereof and shaped to fit with the transitional portion 2c of the crank arm 2. Specifically, this cutout 40 has an arc-shaped top part, and sides extending from opposite ends of the top part to peripheral edges of the cover 4. This cover 4 is fixed to the chainwheel 1 by means of a plurality of screws extending through screw receiving bores 4d of the cover 4 to screw engaging portions (not shown) of the chainwheel 1.

With the cutout 40 having the specific shape as noted above, the cover 4 may be attached and detached without removing the pedal 3 from the crank arm 2. Further, since the crank arm 2 need not be passed through a bore of the cover 4, the crank arm 2 is not obstructive to an operation to attach or detach the cover 4.

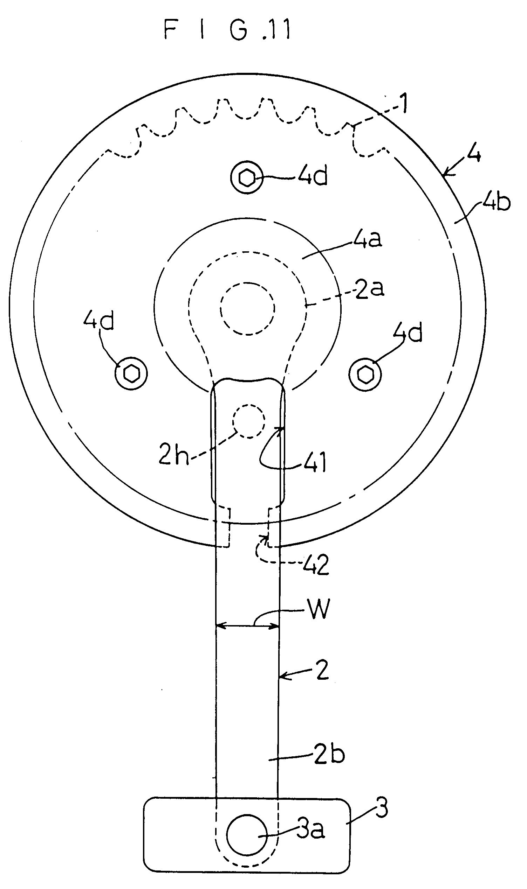

Fig. 10 shows a further embodiment, in which the cover 4 defines a cutout including a substantially rectangular crank arm receiving portion 41, and a crank arm passage portion 42 extending from the crank arm receiving portion 41 to a periphery of the cover 4. The passage portion 42 has a width D slightly larger than a thickness T of the arm portion 2b of the crank arm 2, and smaller than a width W of the arm portion 2b. When the pedal 3 is not attached to the crank arm 2, the cover 4 may be attached to the chainwheel 1 with the crank arm 2 placed in the crank arm receiving portion 41 as in the first embodiment. When the pedal 3 is attached to the crank arm 2, the cover 4 is held perpendicular to the arm portion 2b of the crank arm 2, with the concave surface facing up. In this posture, the cover 4 is moved leftward in Fig. 11, so that the crank arm 2 enters the passage portion 42 of the cutout. The cover 4 is moved further to receive the crank arm 2 in the crank arm receiving portion 41. The cover 4 is then turned 90 degrees out of the picture while being maintained perpendicular to the arm portion 2b. Thereafter, as in the first embodiment, the cover 2 is moved along the crank arm 2 to be fitted on the chainwheel 1.

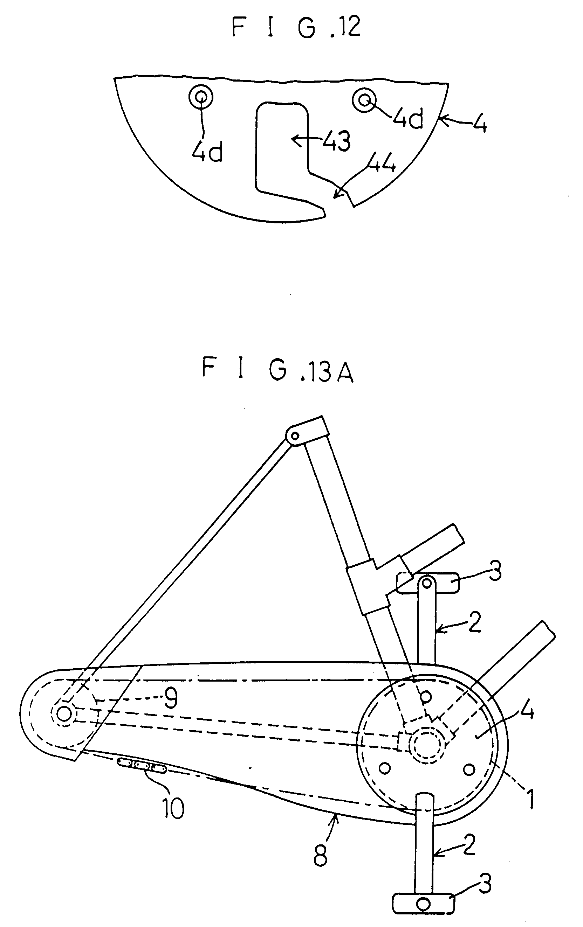

Fig. 12 shows a still further embodiment, in which the cover 4 defines a cutout including a substantially rectangular crank arm receiving portion 43, and a crank arm passage portion 44 extending from the crank arm receiving portion 43 to a periphery of the cover 4. As distinct from the embodiment shown in Figs 10 and 11, this passage portion 44 is displaced from the crank arm receiving portion 43 in a circumferential direction of the cover 4.

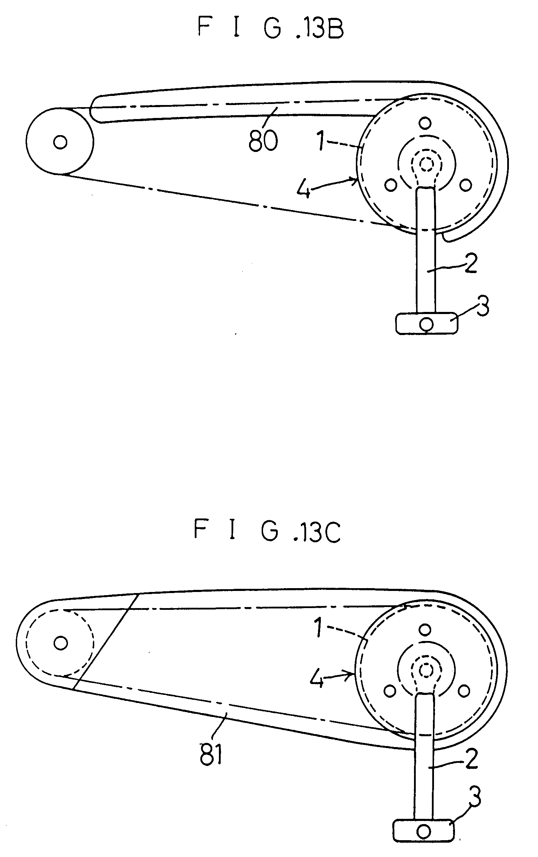

Figs. 13A, 13B and 13C show chain casings 8, 80 and 81 for covering at least part of a chain 10, respectively. Each of these casings 8, 80 and 81 defines a circular opening concentric with a chainwheel 1 for attaching a cover 4.

The casing 8 of Fig. 13A is shaped to expose only a lower portion of the chain 10. The casing 80 of Fig. 13B covers an upper portion of the chain 10 and a front portion of the chainwheel 1. The casing 81 of Fig. 13C entirely covers the chain 10. Each of these casings 8, 80 and 81 is secured to the bottom bracket 6 and frame 11.

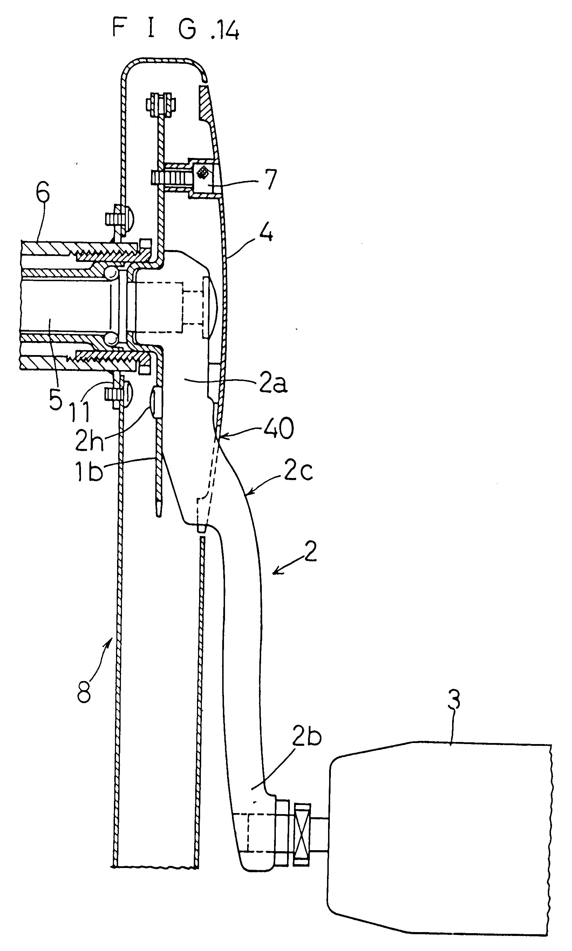

For a bicycle having a chain casing, the cover 4 hereinbefore described acts as an access door. Maintenance and repair of the crank axle 5 and chainwheel 1 may be carried out after removing only the cover 4 and without removing the entire chain casing. With the casings 8 and 81 in Figs. 13A and 13C in particular, the bore of the cover 4 in varied shapes, such as the bore 4c, is closed by the transitional portion 2c of the crank arm 2 to protect the crank assembly from ambient dust and sand. Fig. 14 shows an embodiment employing the cover 4 having the cutout 40 shown in Fig. 9. However, it is possible to use a different cover having one of the cutouts described hereinbefore or a similar cutout.

Though not shown in the drawings, the cover 4 may be attached to both chainwheel 1 and crank arm 2 or only to the crank arm 2, instead of being attached to the chainwheel 1 alone. Alternatively, the cover 4 may be attached to the chainwheel 1 through a mounting member rotatable with the chainwheel 1.

**Claims**

1. A crank mechanism for a bicycle comprising:
   a crank axle;
   a crank arm for driving said crank axle, said crank arm including a proximal portion fixed to said crank axle, and a distal portion extending from said proximal portion; and

a chainwheel rotatable with said crank axle, said chainwheel including a chain engaging portion, and a base portion for contacting a peripheral surface of said crank axle to position said chainwheel;

wherein said chain engaging portion defines a first surface, and said base portion defines a second surface displaced inwardly from said first surface.

2. A crank mechanism as claimed in claim 1, wherein said chainwheel further includes a transitional portion formed between said base portion and said chain engaging portion, said base portion and said chain engaging portion being substantially annular, and said transitional portion being substantially tubular and interconnecting said base portion and said chain engaging portion.

3. A crank mechanism as claimed in claim 2, wherein said transitional portion and said base portion extend substantially along said proximal portion of said crank arm.

4. A crank mechanism as claimed in claim 2, wherein said transitional portion is in contact with an engaging portion of said crank arm fixed to said crank axle to be rotatable with said crank axle.

5. A crank mechanism as claimed in claim 1, further comprising cover means for covering at least said proximal portion from outside.

6. A crank mechanism as claimed in claim 5, wherein said cover means covers said chainwheel also.

7. A crank mechanism as claimed in claim 5, wherein said cover means includes a chainwheel cover fixed to said chainwheel and rotatable with said crank axle.

8. A crank mechanism as claimed in claim 7, wherein said cover means further includes a chain cover fixed to a bicycle frame for substantially entirely covering a chain, said chain cover defining an opening substantially corresponding in diameter to said chainwheel cover for fitting said chainwheel cover thereto.

9. A crank mechanism as claimed in claim 5, wherein said distal portion includes a crank transition portion and an arm portion, said arm portion and said proximal portion extending substantially linearly and perpendicular to said crank axle, said arm portion being displaced outwardly from said proximal portion, and said crank transition portion integrally interconnecting said proximal portion and said arm portion.

10. A crank mechanism as claimed in claim 9, wherein said cover means includes a cutout for receiving said crank transition portion, with said arm portion extending outwardly of said cover means.

11. A crank mechanism as claimed in claim 10, wherein said cutout extends to a peripheral edge of said cover means.

12. A crank mechanism as claimed in claim 10, wherein said cutout is a bore defined in a cover surface.

13. A crank mechanism for a bicycle comprising:
a crank axle;
a crank arm for driving said crank axle, said crank arm including a proximal portion fixed to said crank axle, and a distal portion extending from said proximal portion;
a chainwheel rotatable with said crank axle; and
cover means for covering at least said proximal portion from outside.

14. A crank mechanism as claimed in claim 13, wherein said cover means covers said chainwheel also.

15. A crank mechanism as claimed in claim 13, wherein said cover means includes a chainwheel cover fixed to said chainwheel and rotatable with said crank axle.

16. A crank mechanism as claimed in claim 15, wherein said cover means further includes a chain cover fixed to a bicycle frame for substantially entirely covering a chain, said chain cover defining an opening substantially corresponding in diameter to said chainwheel cover for fitting said chainwheel cover thereto.

17. A crank mechanism as claimed in claim 13, wherein said distal portion includes a crank transition portion and an arm portion, said arm portion and said proximal portion extending substantially linearly and perpendicular to said crank axle, said arm portion being displaced outwardly from said proximal portion, and said crank transition portion integrally interconnecting said proximal portion and said arm portion.

**18.** A crank mechanism as claimed in claim 17, wherein said cover means includes a cutout for receiving said crank transition portion, with said arm portion extending outwardly of said cover means.

**19.** A crank mechanism as claimed in claim 18, wherein said cutout extends to a peripheral edge of said cover means.

**20.** A crank mechanism as claimed in claim 18, wherein said cutout is a bore defined in a cover surface.

# F I G .1

FIG.2

F I G .3

F I G .4A

F I G .4B

5a

2a

2h

2

3

2b

3a

F I G .5

F I G . 6

# F I G .7

# F I G .8

FIG.9

FIG.10

F I G .11

F I G .12

F I G .13 A

F I G .13B

F I G .13C

F I G .14

F I G .15A

F I G .15B

F I G .16

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-1 136 411 (DAVIS)<br>* the whole document * | 13-15 | B62M3/00<br>B62J21/00 |
| A | | 1,3-5,7 | B62J13/00 |
| A | RADMARKT<br>vol. 102, no. 10, October 1991,<br>page 39;<br>DE WOERD BV: 'chain disc' | 5-7,<br>13-15 | |
| A | FR-A-1 429 043 (THUN A.)<br>* figure 1 * | 1 | |
| A | US-A-2 350 468 (KRAEFT H.)<br>* figure 2 * | 3,9,17 | |
| A | FR-A-529 861 (COMBRAY M.)<br>* figures 1,2 * | 6,8 | |

TECHNICAL FIELDS
SEARCHED (Int. Cl.5)

B62M
B62J

The present search report has been drawn up for all claims

| Place of search | Date of completion of the search | Examiner |
|---|---|---|
| THE HAGUE | 07 SEPTEMBER 1992 | DENICOLAI G. |

EPO FORM 1503 03.82 (P0401)